# EUROPEAN PATENT APPLICATION

(11) **EP 4 651 050 A1**
(43) Date of publication of application: **19.11.2025**
(21) Application number: 24203538.4
(22) Date of filing: 30.09.2024
(51) Int. Cl.: G06Q 10/087

(54) **AUTOMATED CARBON ASSET NETWORK SYSTEM AND CARBON ASSET MANAGEMENT METHOD**

(30) Priority: 13.05.2024 CN 202410588554
(71) Applicant: Cedars Digital Pte. Ltd., 048619 Singapore (SG)
(72) Inventor: CHEN, Fu-Ming, New Taipei City (TW); CHANG, Mao-Yen, Changbin Township, Taitung County (TW)
(74) Representative: Viering, Jentschura & Partner mbB Patent- und Rechtsanwälte

(57) **Abstract**

An automated carbon asset network system (30) and a carbon asset management method are provided. The automated carbon asset network system (30) includes a carbon asset management digital platform (300) realizing a carbon inventory executed for an enterprise through a computer system, and the carbon asset management digital platform (300) includes a carbon asset network establishing module (301), a carbon asset network connection module (303), and a carbon asset network update module (305). The carbon asset management method includes: receiving data for stakeholders (311), internal or external carbon asset management digital platform (312, 313), carbon asset management report formats (314, 315), and carbon inventory obtained through automated customized questionnaires (316), by using the application program interface (310); automatically integrating carbon inventory data for supply chains and performing version control; digitally managing a full scope of an organizational greenhouse gas inventory and product carbon footprint information throughout product life cycles for brands in the enterprise; and generating documents according to requirements.

## Description

### FIELD OF THE INVENTION

The present invention relates to a technology that establishes multiparty carbon footprint inventory correlation to execute carbon asset management, and more particularly to an automated carbon asset network system and a carbon asset management method that uses computer technology for automatic collection and processing to organize carbon emissions information and that is capable of calculating and updating greenhouse gas and carbon footprints for operational boundaries of enterprises.

### BACKGROUND OF THE INVENTION

Greenhouse gas (GHG) refers to a gas that can absorb and re-radiate infrared radiations emitted from the surface of the earth. Greenhouse gas mainly includes carbon dioxide (CO₂), methane (CH₄), nitrous oxide (N₂O), hydrofluorocarbons (HFCs), perfluorocarbons (PFCs), sulfur hexafluoride (SF₆), nitrogen trifluoride (NF₃), etc. The increase of these gases is mainly a result of human activities such as burning fossil fuel, industrial manufacturing, and agricultural activities that lead to global warming, extreme weather events, rising sea levels, etc., which can cause serious impact on humanity and the ecosystem.

The United Nations has called for immediate action on carbon reduction, and "net-zero carbon reduction" has become a common global topic. In October 2021, the Science Based Targets Initiative (SBTi) proposed a net-zero standard, the first net-zero goal setting framework for enterprises in the world that is consistent with climate science. Enterprises need to set science-based net-zero targets such that global warming can be limited to be within 1.5°C. As of the end of January 2024, 7,510 enterprises have joined this initiative, 4,599 enterprises have set up science-based emissions reduction targets, and 2,897 enterprises have committed to the goal of "net-zero emissions." Therefore, enterprises that fail to implement greenhouse gas inventory and formulate carbon reduction strategies may have the competitiveness of their operations impaired. However, achieving carbon reduction or zero-carbon is no simple task for enterprises. They must first conduct a greenhouse gas inventory before setting carbon reduction targets and implementing carbon reduction strategies to achieve carbon neutrality.

In accordance with the international greenhouse gas inventory - ISO/CNS 14064-1 Greenhouse Gas - Part 1: specification with guidance at the organization level for quantification and reporting of greenhouse gas emissions and removals (GHG Protocol), the types of inventory are as follows. As shown in Table 1, Category 1 and Category 2, and Scope 1 and Scope 2 relate to the greenhouse gas emissions from corporate operations, and the rest are the greenhouse gas emissions generated by upstream and downstream supply chains.

**Table 1: Comparison Table of Emission Category Classifications in Each Inventory Standard**

| ISO/CNS 14064-1 | GHG Protocol |
|---|---|
| Category 1: Direct greenhouse gas emissions and removals | Scope 1: Direct GHG emissions |
| Category 1.1 - Direct emissions from stationary combustion | 1 - Generation of electricity, heat, or steam |
| Category 1.2 - Direct emissions from mobile combustion | (i.e., emissions result from combustion of fuels in stationary sources) |
| Category 1.3 - Direct process emissions and removals from industrial processes | |
| | 2 - Transportation of materials, products, waste, and employees (i.e., emissions result from the combustion of fuels in company owned/controlled mobile combustion sources) |
| Category 1.4 - Direct fugitive emissions from the release of GHGs in anthropogenic systems | |
| Category 1.5 - Direct emissions and removals from land use, land use change, and forestry (LULUCF) | |
| | 3 - Physical or chemical processing (i.e., emissions mostly result from manufacture or processing of chemicals and materials) |
| | 4 - Fugitive emissions (i.e., emissions result from intentional or unintentional releases) |
| | 5 - Land use and land use change and forestry |
| Category 2: Indirect greenhouse gas emissions from imported energy | Scope 2: Energy indirect GHG emissions |
| Category 2.1 - Indirect emissions | 1 - Indirect emissions from |
| from imported electricity | imported electricity |
| Category 2.2 - Indirect emissions from imported energy | 2 - Indirect emissions from imported energy |
| Category 3: Indirect greenhouse gas emissions from transportation | Scope 3: Other indirect GHG emissions |
| Category 3.1 - Emissions from upstream transportation and distribution for goods | 4 - Upstream transportation and distribution |
| | 6 - Business travel |
| Category 3.2 - Emissions from downstream transportation and distribution for goods | 7 - Employee commuting |
| | 9 - Downstream transportation and distribution |
| Category 3.3 - Emissions from employee commuting | |
| Category 3.4 - Emissions from business travel | |
| Category 3.5 - Emissions from client and visitor transportation | |
| Category 4: Indirect GHG emissions from products used by an organization | 1 - Purchased goods and services |
| | 2 - Capital goods |
| Category 4.1 - Emissions from purchased goods and services | 3 - Fuel- and energy- related activities (not included in Scope 1 or Scope 2) |
| Category 4.2 - Emissions associated with the production of energy | |
| | 5 - Waste generated in |
| purchased | operations |
| Category 4.3 - Emissions from the disposal of solid and liquid waste | 8 - Upstream leased assets |
| Category 4.4 - Emissions from purchased capital goods | |
| Category 4.5 - Emissions from leased assets | |
| Category 5: Indirect GHG emissions associated with the use of products from the organization | 10 - Processing of sold products |
| | 11 - Use of sold products |
| Category 5.1 - Emissions or removals from the use stage | 12 - End-of-life treatment of sold products |
| Category 5.2 - Processing of sold products | 13 - Downstream leased assets |
| | 14 - Franchises |
| Category 5.3 - Emissions from end-of-life stage of the product | 15 - Investments |
| Category 5.4 - Emissions from downstream leased assets | |
| Category 5.5 - Franchises | |
| Category 5.6 - Emissions from investments | |
| Category 6: Indirect GHG emissions from other sources | |

Existing enterprise greenhouse gas inventories use paper reports (such as those in Microsoft Excel°) or electronic platforms to complete a full scope of greenhouse gas inventories each year. However, regardless of which type of reports are kept, a lot of manpower and time must be spent to collect information in the following non-exhaustive categories from subsidiaries, companies with consolidated financial statements, investments, outsourcing factories, and upstream and downstream supply chains, in order to calculate greenhouse gas emissions of the upstream and downstream supply chains:

1. For subsidiaries, companies with consolidated financial statements, and investments: the carbon emissions of the organizational greenhouse gas inventory and the proportion of the carbon emissions that the enterprise needs to recognize (such as: operating rights control or equity control, etc.).

2. For upstream supply chains: the emission factor of purchasing goods and transportation, the emission factor of purchasing services, the emission factor of purchasing capital goods, the emission factor of upstream using fuel and energy, the emission factor of waste processing, the emission factor of leasing products, etc.

3. For downstream supply chains: the emission factor of transporting sold products, the emission factor of post-processing, the emission factor of use, the emission factor of disposal, the emission factor of leasing, the carbon emissions of licensing, the carbon emissions of investment products, etc.

In addition, the above-mentioned information regarding emission factor may be updated annually or over a period of time, and the real-time emission factor needs to be obtained before the full scope of greenhouse gas inventory for a current year can be calculated and updated.

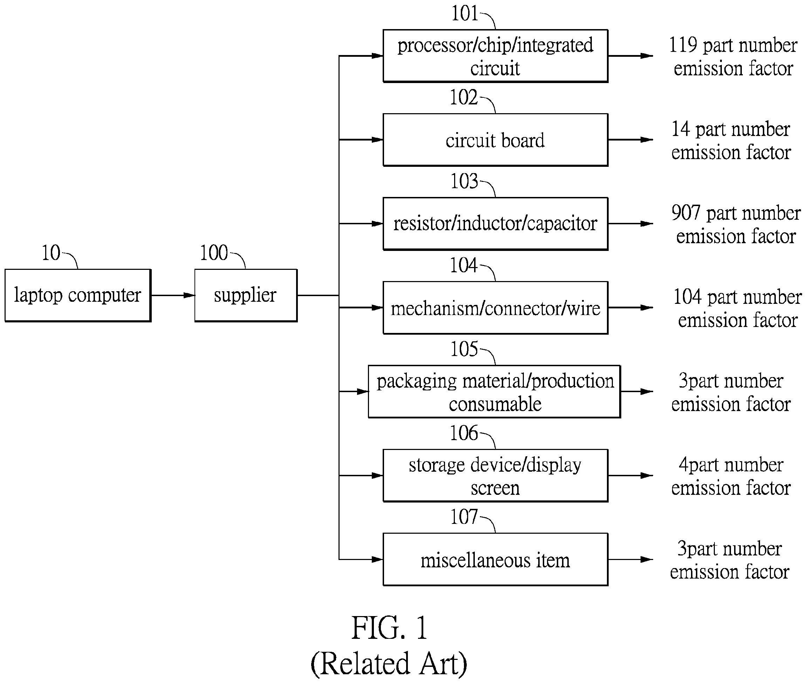

For example, in electronics manufacturing industry, reference can be made to FIG. 1, which shows a emission factor correlation network diagram of products, components, and suppliers for the components. This example shows the emission factor of obtaining relevant goods or services of a certain model of a laptop computer 10, and manufacturing the laptop computer 10 requires one hundred and forty eight suppliers 100, and all of the components have a total of 1,154 part numbers. The emission factors of related part numbers include part number emission factors of one hundred and nineteen processors/chips/integrated circuits 101, part number emission factors of fourteen circuit boards 102, part number emission factors of nine hundred and seven resistors/inductors/capacitors 103, part number emission factors of one hundred and four mechanisms/connectors/wires 104, part number emission factors of three packaging materials/production consumables 105, part number emission factors of four storage devices/display screens 106, and part number emission factors of three miscellaneous items 107.

According to current practices, procurement personnel generally need to contact all one hundred and forty eight suppliers 100 by phone, email, or questionnaires to obtain the emission factors of parts corresponding to the 1,154 part numbers, and then compile and provide the data to dedicated departments to calculate the carbon emissions in the corresponding categories.

Therefore, a lot of manual work needs to be spent on obtaining the data of emission factor and carbon emissions, conducting integration and version control, and then using software reports or electronic platforms to complete a full scope of greenhouse gas inventory. Finally, one of the biggest issues currently encountered in the relevant industry is how to quickly issue carbon-related management documents in real-time based on the requirements of different stakeholders (e.g., domestic policies and regulations, transnational policy requirements, and factories of international brands).

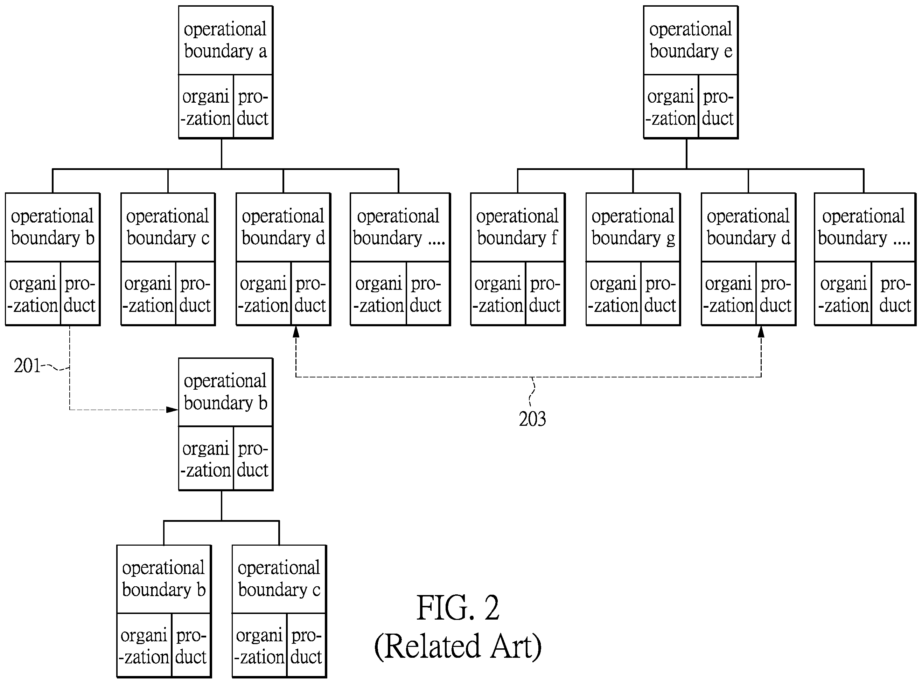

Moreover, an enterprise needs to calculate an operational boundary thereof, and will be required by multiple operational boundaries to submit a "full scope of organizational greenhouse gases and product carbon footprint information throughout product life cycles." Therefore, the need to repeatedly submit and calculate is another one of the main issues in the relevant industry. Next, reference can be made to FIG. 2, which is a schematic diagram of an existing manner of establishing carbon footprints between different operational boundaries.

In the figure, an operational boundary a of an enterprise includes organizational greenhouse gas (represented by "organization" in the figure) and product carbon footprint information (represented by "product" in the figure). The associated upstream and downstream manufacturers also form an operational boundary b, an operational boundary c, and an operational boundary d, each covering organizational greenhouse gas and product carbon footprint information; the upstream and downstream manufacturers associated with an operational boundary e of another enterprise form an operational boundary f, an operational boundary g, an operational boundary d, etc. In this example, as shown in a connection 203, the operational boundary d that is associated with the operational boundary a is also associated with the operational boundary e, that is, the operational boundary d is the upstream and downstream manufacturer of both the operational boundary a and the operational boundary e. On the other hand, as shown in a connection 201, the operational boundary b that is associated with the operational boundary a is also the upstream and downstream manufacturer of itself (i.e., operational boundary b) and the operational boundary c.

Accordingly, in a complex upstream and downstream supply chain relationship, to establish operational boundaries formed by the organizational greenhouse gas and product carbon footprint information of the enterprise, under the existing manners of operation, complex issues such as duplicate counting or requirements to repeatedly provide the organizational greenhouse gas and product carbon footprint information due to complex relationships may arise. Therefore, under the demand of global net zero emissions, carbon tax, and sustainable development, the outsourcing factories and supply chains associated with the enterprise also need to establish operational boundaries, or the operational boundary of another enterprise may request the outsourcing factories and supply chains to submit the organizational greenhouse gas and product carbon footprint information; in addition, an inventory result, a verification, and a data exchange need to be updated annually, such that the difficulty of carbon footprint inventory becomes more complicated and difficult with the higher complexity of the operational boundary of the enterprise and the relationships between enterprises.

However, the current manner of performing a carbon inventory generally only uses certain software solutions to collect relevant data. Due to the lack of effective carbon inventory tools, the carbon inventory becomes more difficult with the increase in complexity of carbon footprints. Relevant issues at least include the possibility of duplicate data on organizational greenhouse gas inventories and product carbon footprint information due to overlapping operational boundaries and the requirement to update the information annually. Moreover, when a downstream manufacturer that is originally in an operational boundary of another enterprise needs to establish an operational boundary due to the requirement for the carbon inventory and invites upstream, parallel, or further downstream manufacturers in the operational boundary of the downstream manufacturer to do the same, additional costs and time that are spent in repeating the same process will be incurred.

### SUMMARY OF THE INVENTION

In order to provide a system that can automatically process carbon inventory data and establish relevant documents, the present invention provides an automated carbon asset network system and a carbon asset management method. The automated carbon asset network system established using computer network systems and software can process collected carbon inventory data of an enterprise and upstream and downstream manufacturers of the enterprise, establish the correlation between the enterprise and stakeholders, and effectively produce carbon-inventory-related documents that are needed by different stakeholders.

According to one embodiment of the automated carbon asset network system provided in the present invention, the automated carbon asset network system includes a carbon asset management digital platform that realizes a carbon inventory for an enterprise through a computer system. The carbon asset management digital platform mainly includes a carbon asset network establishing module, a carbon asset network connection module, and a carbon asset network update module.

The automated carbon asset network system executes an automated carbon asset management method through a carbon asset management digital platform, which receives one or more external carbon asset management report formats from at least one stakeholder, an internal carbon asset management digital platform, one or more external carbon asset management digital platforms, and/or carbon inventory data obtained through one or more automated customized questionnaires through an application program interface, and the automated carbon asset network system automatically integrates organizational greenhouse gas inventory information and product carbon footprint information and performs version control for upstream and downstream supply chains outside each of a plurality of operational boundaries, and digitally update in real-time a full scope of the organizational greenhouse gas inventory and product carbon footprint information throughout product life cycles under one or more brands of the enterprise. The automated carbon asset management method includes processes as follows: establishing a carbon asset network of the enterprise by using a carbon asset network establishing module based on a report of an operational boundary of the enterprise, and the carbon asset network including one or more external operational boundaries of one or more external enterprises associated with the enterprise; configuring a connection manner between the operational boundary of the enterprise and the associated one or more external operational boundaries by using a carbon asset network connection module, an application program interface being used to establish the connection manner between one or more carbon asset management digital platforms of each of a plurality of brands of the one or more external enterprises, the one or more carbon asset management report formats, and/or the one or more automated customized questionnaires; or, the connection manner between the operational boundaries is not configured; when carbon emissions information of any of the associated one or more external operational boundaries is changed, updating the operational boundary of the enterprise by using the carbon emissions information of the associated one or more external operational boundaries, and performing version control on emission factor and emissions by using a carbon asset network update module.

The at least one stakeholder includes one or any combination of government organization requirements, environmental protection requirements, international supply chain brand requirements, international government requirements, and regional alliance requirements.

The one or more carbon asset management report formats include a self-owned report format provided by each of the stakeholders to the enterprise, and the full scope of the organizational greenhouse gas inventory and the product carbon footprint information throughout the product life cycles are managed in a form of reports.

Furthermore, a format of the one or more automated customized questionnaires includes the format of the one or more automated customized questionnaires provided to the enterprise by the carbon asset management digital platform of each of the brands of the enterprise, and a full scope of the organizational greenhouse gas inventory and the product carbon footprint information throughout the product life cycles are managed in a form of questionnaires.

Moreover, the report for establishing the operational boundary of the carbon asset network of the enterprise includes carbon emissions information disclosed by one or more subsidiaries of the enterprise, companies with consolidated financial statements, one or more investment companies, one or more outsourcing factories, and upstream and downstream supply chains.

In this way, after configuring the connection manner between the operational boundary of the enterprise and the associated one or more external operational boundaries through the carbon asset network connection module, invitation information is send to the associated external enterprises having the one or more external operational boundaries through the carbon asset management digital platform, so as to invite the associated external enterprises having the one or more external operational boundaries to accept invitation and return carbon emissions information that are agreed to be disclosed.

Furthermore, the automated carbon asset network system also includes a carbon asset network dashboard module used to present a full scope of organizational greenhouse gases and the product carbon footprint information throughout the product life cycles generated by operations of the enterprise, according to the carbon asset network, to the one or more operational boundaries of the one or more external enterprises associated with the enterprise in an interactive allocation manner.

The automated carbon asset network system further includes a carbon asset network reporting module used to report the full scope of organizational greenhouse gas and the product carbon footprint information throughout the product life cycles generated by operations of the enterprise, and issue carbon-related management documents in real-time according to requirements of each of the stakeholders.

Furthermore, in the automated carbon asset management method executed by the carbon asset management digital platform, a carbon asset network of the enterprise is established by using a carbon asset network establishing module based on a report of an operational boundary of the enterprise, and a connection manner between the operational boundary of the enterprise and the associated one or more external operational boundaries is configured by using a carbon asset network connection module. An application program interface is mainly used to establish the connection manner between one or more carbon asset management digital platforms of each of a plurality of brands of the one or more external enterprises, the one or more carbon asset management report formats, and/or the one or more automated customized questionnaires; or, the connection manner between the operational boundaries is not configured.

According to the above-mentioned connection manner, the carbon inventory data can be obtained, and the carbon inventory data includes a full scope of the organizational greenhouse gas inventory and the product carbon footprint information throughout the product life cycles. Moreover, when carbon emissions information of any of the associated one or more external operational boundaries is changed, the carbon asset network update module updates the operational boundary of the enterprise by using the carbon emissions information of the associated one or more external operational boundaries, and performs version control on emission factor and emissions.

These and other aspects of the present invention will become apparent from the following description of the embodiment taken in conjunction with the following drawings and their captions, although variations and modifications therein may be affected without departing from the spirit and scope of the novel concepts of the invention.

### BRIEF DESCRIPTION OF THE DRAWINGS

The described embodiments may be better understood by reference to the following description and the accompanying drawings, in which:
FIG. 1 is a schematic emission factor correlation network diagram of existing products, components and suppliers of the components in the prior art;
FIG. 2 is a schematic diagram of establishing carbon footprints between different operational boundaries in the prior art;
FIG. 3 is a schematic diagram of establishing a platform architecture for executing a carbon inventory through an automated carbon asset network system;
FIG. 4 is a schematic flowchart of an embodiment of the carbon asset management method;
FIG. 5 is a schematic diagram of operational boundaries in different systems;
FIG. 6 is a schematic diagram of an embodiment of using software to establish a stakeholder network diagram in the automated carbon asset network system;
FIG. 7 is another schematic diagram of one embodiment of using software to establish a stakeholder network diagram in the automated carbon asset network system;
FIG. 8 is a schematic diagram of filtering stakeholder relation to establish a report;
FIG. 9 is a schematic diagram of the carbon asset network establishing module configuration in the automated carbon asset network system;
FIG. 10 is a schematic diagram of configurations of the carbon asset network establishing module and the carbon asset network connection module in the automated carbon asset network system; and
FIG. 11 is a schematic diagram of a data relationship between organizational greenhouse gas inventory categories and product carbon footprint stages.

### DETAILED DESCRIPTION OF THE EXEMPLARY EMBODIMENTS

The present invention is more particularly described in the following examples that are intended as illustrative only since numerous modifications and variations therein will be apparent to those skilled in the art. Like numbers in the drawings indicate like components throughout the views. As used in the description herein and throughout the claims that follow, unless the context clearly dictates otherwise, the meaning of "a," "an" and "the" includes plural reference, and the meaning of "in" includes "in" and "on." Titles or subtitles can be used herein for the convenience of a reader, which shall have no influence on the scope of the present invention.

The terms used herein generally have their ordinary meanings in the art. In the case of conflict, the present document, including any definitions given herein, will prevail. The same thing can be expressed in more than one way. Alternative language and synonyms can be used for any term(s) discussed herein, and no special significance is to be placed upon whether a term is elaborated or discussed herein. A recital of one or more synonyms does not exclude the use of other synonyms. The use of examples anywhere in this specification including examples of any terms is illustrative only, and in no way limits the scope and meaning of the present invention or of any exemplified term. Likewise, the present invention is not limited to various embodiments given herein. Numbering terms such as "first," "second" or "third" can be used to describe various components, signals or the like, which are for distinguishing one component/signal from another one only, and are not intended to, nor should be construed to impose any substantive limitations on the components, signals or the like.

The present invention provides an automated carbon asset network system and a carbon asset management method, in which a correlation data structure formed by an enterprise during a carbon inventory is used to establish a carbon asset network by using computer network technologies, thereby automating the carbon asset network system to manage a full scope of organizational greenhouse gases and product carbon footprints throughout product life cycles generated by operations of the enterprise. The service scope of the automated carbon asset network system includes parent companies, subsidiaries, companies with consolidated financial statements, investments, outsourcing factories, and upstream and downstream supply chains of the enterprise. The carbon asset management method includes automated collecting, updating, version controlling, and integrating of carbon emissions information, such as: emission factor, emissions, or other related information. The carbon asset management method further includes calculating and updating greenhouse gases and carbon footprints of the operational boundaries of the enterprise, and quickly issuing carbon-related management documents required by different stakeholders in real-time according to the requirements of different stakeholders (e.g., domestic policies and regulations, transnational policy requirements, and factories of international brands).

According to embodiments of the present invention, the automated carbon asset network system realized with computer technologies can be a cloud system that, through a network, allows multiple users to collect data, establish the operational boundaries of multiple enterprises based on carbon footprints, establish a network diagram of stakeholder relationships between different operational boundaries, and filter out the required stakeholder relationships based on requirements and output carbon footprint reports, thereby realizing a cloud service for the carbon inventory.

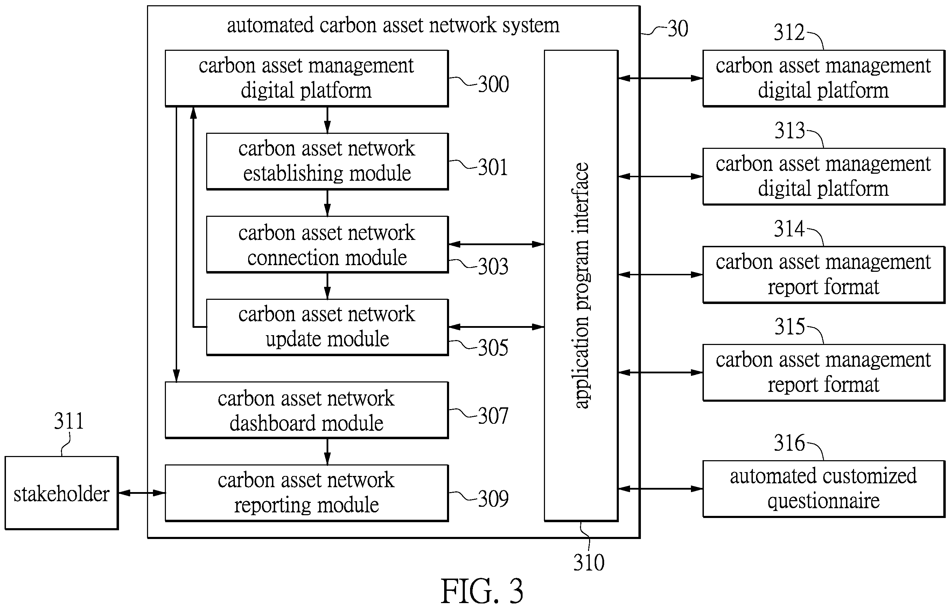

FIG. 3 is a schematic diagram of establishing a platform architecture for executing the carbon inventory through an automated carbon asset network system. The figure shows that the architecture of an automated carbon asset network system 30 includes a carbon asset management digital platform 300 in an enterprise, in which various functional modules are implemented through hardware and software collaboration. The automated carbon asset network system 30 mainly includes a carbon asset network establishing module 301, a carbon asset network connection module 303, and a carbon asset network update module 305.

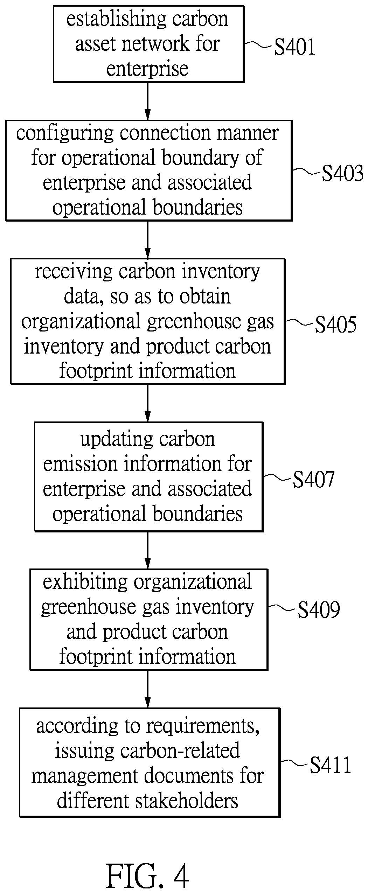

According to one embodiment, the automated carbon asset network system provided in the present invention can provide services for multiple enterprises to perform carbon asset management and establish the carbon asset network for the enterprises. Specifically, for each of the enterprises, the carbon asset management digital platform 300 that executes the carbon inventory through a computer system is provided. For each of the brands of the enterprises, a carbon asset management digital platform is provided to digitally manage a full scope of organizational greenhouse gas inventory and the product carbon footprints throughout the product life cycles, thereby allowing the automated carbon asset network system 30 to execute the carbon asset management method through the carbon asset management digital platform 300. For the carbon asset management method, reference can be made to the flowchart of the embodiment as shown in FIG. 4.

As shown in the diagram of the system architecture in FIG. 3, the automated carbon asset network system 30 realizes the carbon asset management digital platform 300 through the computer system. For an enterprise, the carbon asset management digital platform 300 receives one or more external carbon asset management report formats 314 and 315 from at least one stakeholder 311, one or more external carbon asset management digital platforms 312 and 313 from external enterprises, and/or obtains carbon inventory data through one or more automated customized questionnaires 316 through an application program interface (API) 310. These data sources are all data sources for the enterprise to establish a carbon asset network, such that one or more brands in the enterprise can digitally manage the full scope of the organizational greenhouse gas inventory and the product carbon footprint information throughout the product life cycles for each of the products of the brands. Therefore, the carbon asset management digital platform 300 establishes the carbon asset network of the enterprise based on the operational boundary report of the enterprise through the carbon asset network establishing module 301.

The automated carbon asset network system 30 executes the carbon asset management method through the carbon asset management digital platform 300. In the carbon asset management method, according to one embodiment, the carbon asset management digital platform 300 can establish a carbon asset network for the enterprise according to a scope of the operational boundary of the enterprise through the carbon asset network establishing module 301. In addition to the operational boundary of the enterprise, the carbon asset network further includes one or more external operational boundaries of one or more external enterprises. The scope of the operational boundary of the enterprise may include subsidiaries, companies with consolidated financial statements, investments, outsourcing factories, and upstream and downstream supply chains that need to be disclosed. The purpose of this process is to obtain carbon emissions information that needs to be disclosed, including emission factor, emissions, and other relevant information (step S401).

Then, the operational boundary of the enterprise is connected to one or more associated external operational boundaries through the carbon asset network connection module 303. Configuring a connection manner includes using the application program interface 310 to establish the connection manner between the one or more carbon asset management digital platforms 312 and 313 of each of the plurality of brands of the one or more external enterprises, the one or more carbon asset management report formats 314 and 315, and/or the one or more automated customized questionnaires 316; alternatively, by using the application program interface 310, the system does not establish the connection manner to a specific target (step S403). According to one embodiment, after the carbon asset management digital platform 300 configures the connection manner through the application program interface 310, the carbon asset management digital platform 300 can establish the operational boundaries in a blank network or a blank network list, and the operational boundaries can render corresponding carbon asset network maps and share organizational carbon inventory and product carbon footprint information with each other.

Accordingly, the carbon asset management digital platform 300 can invite the operational boundaries of an existing system or an external system. That is, the carbon asset management digital platform 300 sends invitation information to an enterprise in a relevant operational boundary, so as to invite the enterprises in the relevant operational boundary to accept the invitation information and return carbon emissions information agreed to be disclosed. The carbon emissions information can include relevant information such as emission factor and emissions. The invited operational boundary can convert external system data directly through the internal system or software interface, and can choose to share part of the data or all of the data for data handshake. Afterwards, the connection between the operational boundary of the enterprise and the relevant operational boundary is completed through the application program interface 310.

According to the above-mentioned connection relationship, in addition to a carbon asset management digital platform 300 that is internal, the carbon asset management digital platform 300 receives data from the at least one stakeholder 311, the one or more external carbon asset management digital platforms 312, 313, one or more external carbon asset management report formats 314, 315, and/or carbon inventory obtained through one or more automated customized questionnaires 316, so as to obtain organizational greenhouse gas inventory and product carbon footprint information (step S405).

In this carbon asset management digital platform 300, the organizational greenhouse gas inventory information and the product carbon footprint information of the upstream and downstream supply chains that are external to each of the operational boundaries are automatically integrated and version controlled for obtaining a full scope of the organizational greenhouse gas inventory and the product carbon footprint information throughout the product life cycles for one or more brands in the enterprise. Accordingly, when the system learns through software manner that the carbon emissions information (such as emission factor and emissions) of any of the associated one or more operational boundaries is changed, the change is send back in real-time to the carbon asset network update module 305. The carbon asset network update module 305 then updates the operational boundary of the enterprise by using the carbon emissions information of the associated one or more external operational boundaries, performs version control on emission factor and emissions, and thus completes an updating operation for the emission factor and emissions of the operational boundary of the enterprise through the application program interface 310 (step S407).

According to one embodiment, in accordance with the requirement to present a full scope of organizational greenhouse gases and the product carbon footprint information throughout the product life cycles generated by the operations of the enterprise to other operational boundaries associated with the enterprise, the automated carbon asset network system 30 further includes a carbon asset network dashboard module 307 through software and hardware collaboration. Furthermore, the automated carbon asset network system 30 includes a carbon asset network reporting module 309 to issue carbon-related management documents in real-time according to requirements of each of the stakeholders 311.

In this way, in the carbon asset management digital platform 300, through the carbon asset network dashboard module 307 presenting the full scope of the organizational greenhouse gases and the product carbon footprint information throughout the product life cycles generated by operations of the enterprise, the carbon emissions information disclosed by one or more external operational boundaries of one or more external enterprises associated with the enterprise, one or more subsidiaries of the enterprise, companies with consolidated financial statements, multiple investment companies, one or more outsourcing factories, and upstream and downstream supply chains can be presented in an image and in an interactive allocation manner (step S409). Afterwards, through the carbon asset network reporting module 309, the full scope of the organizational greenhouse gases and the product carbon footprint information throughout the product life cycles generated by operations of the enterprise are filtered through a filtering mechanism of the automated carbon asset network system 30, and carbon-related management documents required by different stakeholders can be quickly issued in real-time according to the requirements of different stakeholders (e.g., domestic policies and regulations, transnational policy requirements, and factories of international brands) (step S411).

It should be noted that, the stakeholders 311 may include one or any combination of government organization requirements, environmental protection requirements, international supply chain brand requirements, international government requirements, and regional alliance requirements. Furthermore, the one or more carbon asset management report formats include a self-owned report format provided by each of the stakeholders to the enterprise, and the full scope of the organizational greenhouse gas inventory and the product carbon footprint information throughout the product life cycles are managed in a form of reports

(such as Microsoft Excel°). A format of the one or more automated customized questionnaires includes the format of the one or more automated customized questionnaires provided to the enterprise by the carbon asset management digital platform of each of the brands of the enterprise, and the full scope of the organizational greenhouse gas inventory and the product carbon footprint information throughout the product life cycles are managed in a form of questionnaires.

Furthermore, in the automated carbon asset network system, the full scope of the organizational greenhouse gases at least includes: direct greenhouse gas emissions that include direct emissions from stationary combustion (i.e., stationary fuel sources), direct emissions from mobile combustion (i.e., mobile fuel sources), direct process emissions and removals from industrial processes (i.e., process emissions sources), direct fugitive emissions from the release of GHGs in anthropogenic systems (i.e., fugitive emissions sources), direct emissions and removals from land use, land use change, and forestry (LULUCF) (i.e., land use, land use change, and forestry); energy indirect greenhouse gas emissions that include indirect emissions from imported electricity (i.e., purchased electricity) and indirect emissions from imported energy (i.e., purchased energy); and other indirect greenhouse gas emissions that include emissions from upstream transportation and distribution for goods (i.e., upstream transportation and distribution), emissions from downstream transportation and distribution for goods (i.e., downstream transportation and distribution), emissions from employee commuting (i.e., employee commuting), emissions from business travel (i.e., business travel), emissions from client and visitor transportation, emissions from purchased goods and services (i.e., purchase of goods or services), emissions associated with the production of energy purchased (i.e., fuel and energy activities), emissions from the disposal of solid and liquid waste (i.e., waste generated from operations), emissions from purchased capital goods (i.e., upstream purchase of capital goods), emissions from leased assets (i.e., upstream leasing assets), emissions or removals from the use stage (i.e., using of sold products), processing of sold products, emissions from end-of-life stage of the product (i.e., disposal of sold products), emissions from downstream leased assets (i.e., downstream leasing assets), franchises (i.e., licensing and franchises), and emissions from investments (i.e., investments).

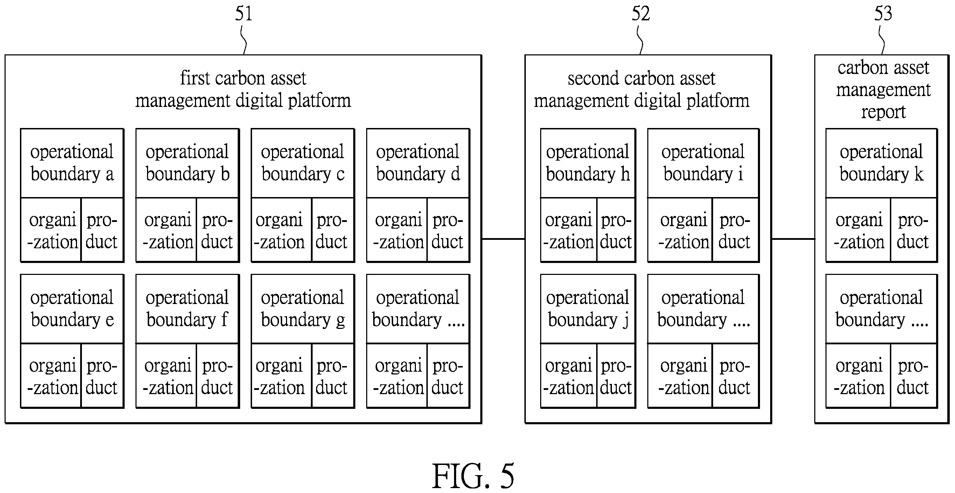

In the following descriptions, FIG. 5 to FIG. 8 show the relationship between different operational boundaries, the relationship between operational boundaries on different digital platforms, and a schematic diagram of one embodiment that provides reports based on correlations of operational boundaries.

FIG. 5 shows that multiple operational boundaries are established in a first carbon asset management digital platform 51 that schematically includes an operational boundary a, an operational boundary b to an operational boundary g, etc. A second carbon asset management digital platform 52 is also shown, and includes an operational boundary h, an operational boundary i, an operational boundary j, etc., and each of the operational boundaries represent organizational greenhouse gases and product carbon footprint information obtained by an organization, a company, or an enterprise that executes a carbon inventory through corresponding digital platforms. A carbon asset management report 53 establishes an operational boundary k, etc. In the first carbon asset management digital platform 51, each of the operational boundaries is an internal system of each of the enterprises, and the second carbon asset management digital platform 52 and the carbon asset management report 53 providing carbon footprint information are external systems.

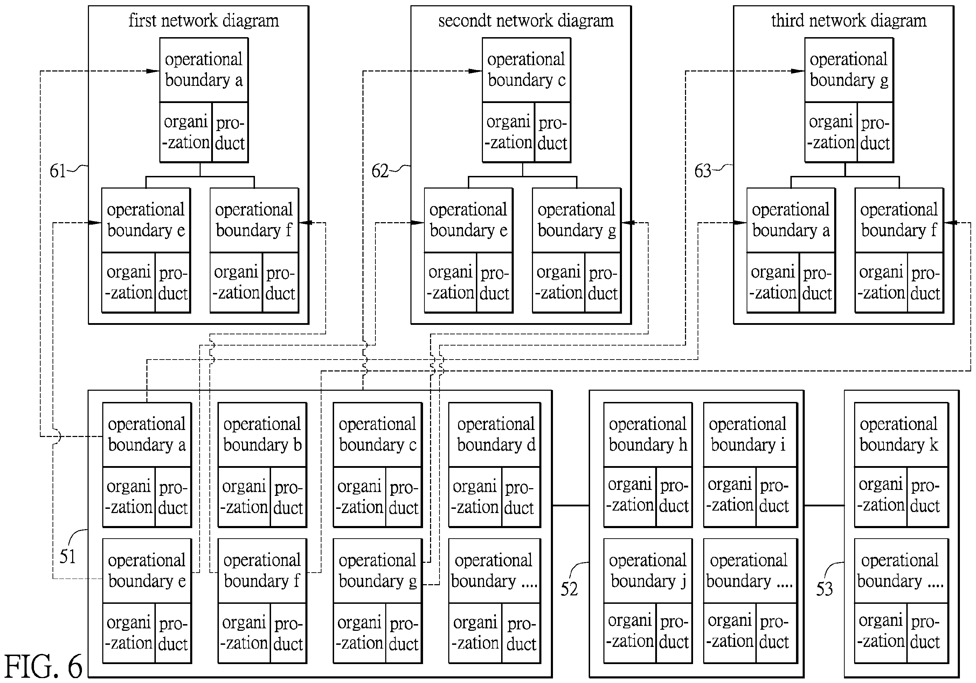

When an enterprise executes the carbon inventory, an operational boundary needs to be formed by the organizational greenhouse gases and the product carbon footprint information of the enterprise from a complex upstream and downstream supply chain relationship. The carbon inventory is executed based on the carbon asset network established by the enterprise. Information search, verification, and data exchange are carried out between operational boundaries through the invitation mechanism, and annual updates are also required. In other words, the carbon asset management method is executed through the automated carbon asset network system as described in the above-mentioned embodiment. For relevant operations, reference can be made to the automated carbon asset network system as shown in FIG. 6, which shows a schematic diagram of an embodiment of using software to establish a stakeholder network diagram in the automated carbon asset network system.

In FIG. 6, the first carbon asset management digital platform 51, the second carbon asset management digital platform 52, and the carbon asset management report 53 as shown in FIG. 5 are also shown. When an enterprise establishes an operational boundary of the enterprise, a blank network or a blank network list is first established in the carbon asset management digital platform, and then one or more associated operational boundaries are invited based on the carbon asset network of the enterprise. Afterwards, carbon inventory data of the relevant operational boundaries including organizational carbon inventory and product carbon footprint information are obtained.

As shown in FIG. 6, an enterprise that has established an operational boundary a on the first carbon asset management digital platform 51 is used as an example. When a carbon inventory is executed, according to a first network diagram 61, carbon emission data of an operational boundary e and an operational boundary f need to be obtained. In this way, carbon inventory data of the operational boundary a, the operational boundary e, and the operational boundary f can be simultaneously obtained from the first carbon asset management digital platform 51. According to a second network diagram 62, if carbon inventory data of the operational boundary c needs to be obtained, then carbon inventory data of the operational boundary c, an operational boundary e, and an operational boundary g are simultaneously obtained from the first carbon asset management digital platform 51. Similarly, according to a third network diagram 63, if carbon inventory data of the operational boundary g needs to be obtained, then carbon inventory data of the operational boundary a, the operational boundary f, and the operational boundary g are simultaneously obtained from the first carbon asset management digital platform 51.

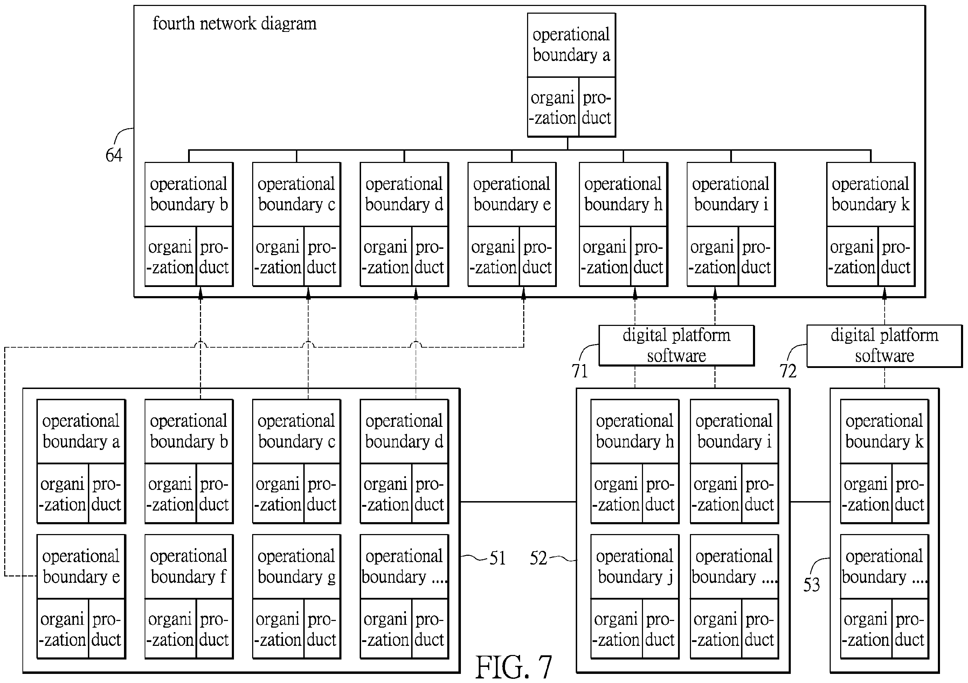

In addition to FIG. 6, in which the carbon inventory data of related operational boundaries are obtained from the same carbon asset management digital platform (i.e., the first carbon asset management digital platform 51), reference is further made to FIG. 7, in which the related operational boundaries belong to different carbon asset management digital platforms.

FIG. 7 is another schematic diagram of one embodiment of using software to establish a stakeholder network diagram in the automated carbon asset network system. In this embodiment, an operational boundary a of an enterprise is shown. Based on a fourth network diagram 64 that is shown in the figure, associated operational boundaries of the operational boundary a include an operational boundary b, an operational boundary c, an operational boundary d, an operational boundary e, an operational boundary h, an operational boundary i, an operational boundary k, etc.

According to the fourth network diagram 64, carbon inventory data of the operational boundary a, the operational boundary b, the operational boundary c, the operational boundary d, and the operational boundary e can be obtained from the first carbon asset management digital platform 51. In addition, a connection needs to be made to the second carbon asset management digital platform 52 through digital platform software 71 provided by the first carbon asset management digital platform 51, and the carbon inventory data of the operational boundary h and the operational boundary i are obtained from the second carbon asset management digital platform 52. Furthermore, a connection needs to be made to the carbon asset management report 53 through digital platform software 72 provided by the first carbon asset management digital platform 51, and the carbon inventory data of the operational boundary k is obtained from the carbon asset management report 53. In this way, in addition to the first carbon asset management digital platform 51 of the operational boundary, invitations can be executed through the digital platform software 71 and 72 to successfully obtain carbon inventory data from external systems, such that a network diagram is rendered for the automated carbon asset network system.

Therefore, according to an implementation of the automated carbon asset network system, software means can be used to connect different digital platforms. The operational boundaries that are invited can directly convert external system data through an internal system or a software interface, and can also choose to share part of the data or all of the data to perform data handshake and enable sharing of organizational carbon inventory and product carbon footprint information with each other.

According to the above-mentioned embodiments and related examples, through the automated carbon asset network system provided in the present invention, when the complexity of the operational boundary of the enterprise and the interrelationship between the enterprises is very high, the complex carbon inventory process can still be resolved through the implementation of the carbon asset management method executed by the automated carbon asset network system.

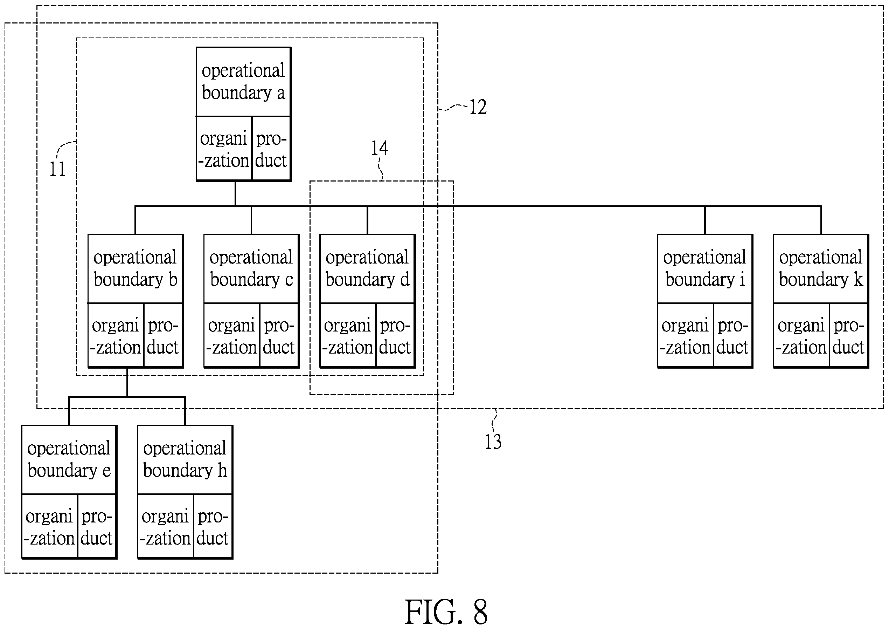

Furthermore, by establishing connections between different platforms and the carbon asset network of each of the enterprises, when information is updated in any link, through the automated carbon asset network system, data for each of the operational boundaries that is invited can be updated in real-time. Afterwards, by using a filter, corresponding carbon information documents can be quickly generated according to the requirements of different stakeholders. Reference can be made to the schematic diagram of an embodiment of filtering stakeholder relationships to establish a report as shown in FIG. 8.

According to the schematic diagram as shown in FIG. 8, the requirements of stakeholders can be configured through a filtering mechanism provided by the automated carbon asset network system, such that the automated carbon asset network system can issue carbon-related management documents in real-time according to the requirements.

For example, in the figure, a first stakeholder relationship 11 is marked with a broken line, and the first stakeholder relationship 11 includes the operational boundary a, the operational boundary b, the operational boundary c, and the operational boundary d. Based on the operational boundaries associated with the first stakeholder relationship 11, the automated carbon asset network system obtains the carbon inventory data of each of the operational boundaries from the corresponding carbon asset management digital platform, so as to issue carbon-related management documents of the first stakeholder relationship 11 in real-time. A second stakeholder relationship 12 is configured through the filter, and the second stakeholder relationship 12 includes the operational boundary a, the operational boundary b, the operational boundary c, the operational boundary d, the operational boundary e, and the operational boundary h. Based on the second stakeholder relationship 12, the automated carbon asset network system respectively obtains carbon inventory data of each of the operational boundaries from the carbon asset management digital platform of the system, so as to issue carbon-related management documents of the second stakeholder relationship 12 in real-time.

FIG. 8 further shows a third stakeholder relationship 13 configured by using the filter, and the third stakeholder relationship 13 includes the operational boundary a, the operational boundary b, the operational boundary c, the operational boundary d, the operational boundary i, and the operational boundary k. Furthermore, the figure shows a fourth stakeholder relationship 14 that only includes the operational boundary d. The automated carbon asset network system can issue carbon-related management documents in real-time according to the requirements of different stakeholders, and can perform version control for emission factor and emissions based on the relevant carbon asset network.

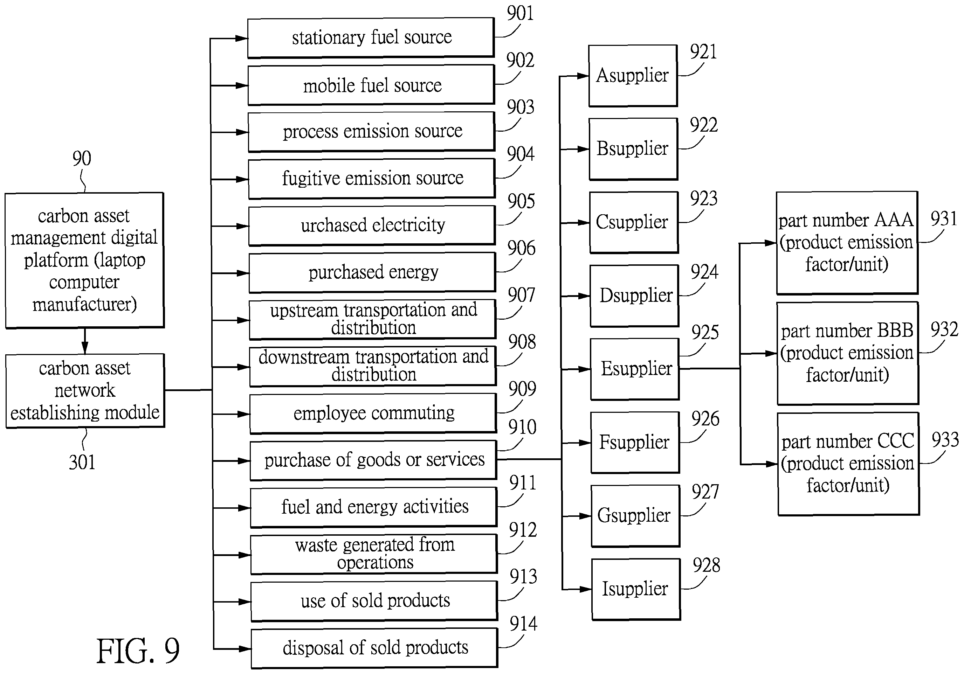

Next, FIG. 9 to FIG. 11 show implementations of operations of the automated carbon asset network system. FIG. 9 is a schematic diagram of the carbon asset network establishing module configuration in the automated carbon asset network system.

In the figure, a carbon asset management digital platform 90 provides an automated carbon asset network system through a digital platform for a laptop computer manufacturer to execute a carbon inventory, and uses the carbon asset network establishing module 301 to establish a corresponding carbon asset network based on reports of operational boundaries of the laptop computer manufacturer. The carbon asset network discloses the categories of the organizational greenhouse gas inventory of the laptop computer manufacturer. The organizational greenhouse gas inventory includes: stationary fuel sources 901, mobile fuel sources 902, process emission sources 903, and fugitive emission sources 904 that belong to a first category of direct greenhouse gas emissions and removal; purchased electricity 905 and purchased energy 906 that belong to a second category of indirect greenhouse gas emissions from input energy; upstream transportation and distribution 907, downstream transportation and distribution 908, and employee commuting 909 that belong to a third category of indirect greenhouse gas emissions from transportation; purchase of goods or services 910, fuel and energy activities 911, and waste generated from operations 912 that belong to a fourth category of indirect greenhouse gas emissions generated by products used by the organization; and use of sold products 913 and disposal of sold products 914 that belong to a fifth category of indirect greenhouse gas emissions associated with the use of the products of the organization.

Then, according to the categories of organizational greenhouse gas inventory of the laptop manufacturer established in the system, associated suppliers (such as a supplier A 921, a supplier B 922, a supplier C 923, a supplier D 924, a supplier E 925, a supplier F 926, a supplier G 927, and a supplier I 928) can be obtained, thereby allowing the laptop computer manufacturer to obtain relevant carbon inventory data provided by each of the suppliers. In this figure, the carbon inventory data of a part number AAA (product emission factor/unit) 931, a part number BBB 932, and a part number CCC 933 provided by the supplier E 925 are shown.

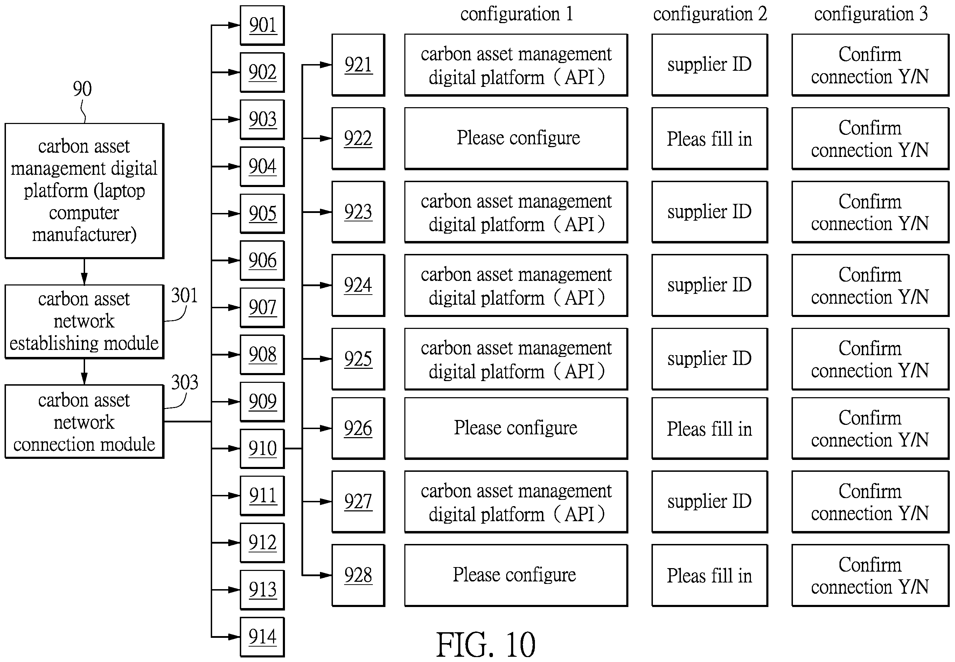

According to FIG. 9, the carbon asset network of the laptop computer manufacturer is established through the carbon asset network establishing module 301 in the automated carbon asset network system. Further, reference is made to FIG. 10, which shows using the carbon asset network connection module 303 in the automated carbon asset network system to configure the connection manner between the operational boundary of the laptop computer manufacturer in the carbon asset management digital platform 90 and the associated external one or more operational boundaries.

According to the implementation as shown in FIG. 10, the carbon asset management digital platform 90 configures the connection manner between the operational boundary of the laptop computer manufacturer and other associated operational boundaries through the carbon asset network connection module 303. As shown in the figure, various parameters of a configuration 1, a configuration 2, and a configuration 3 as well as configurations that need to be filled in are automatically applied from the carbon asset network connection module 303. The configuration 1 may include an application program interface (API) for configuring the carbon asset management digital platform 90 to establish connections with external systems, the configuration 2 displays a request to fill in the supplier of a specific product, and configuration 3 provides a confirmation for connection.

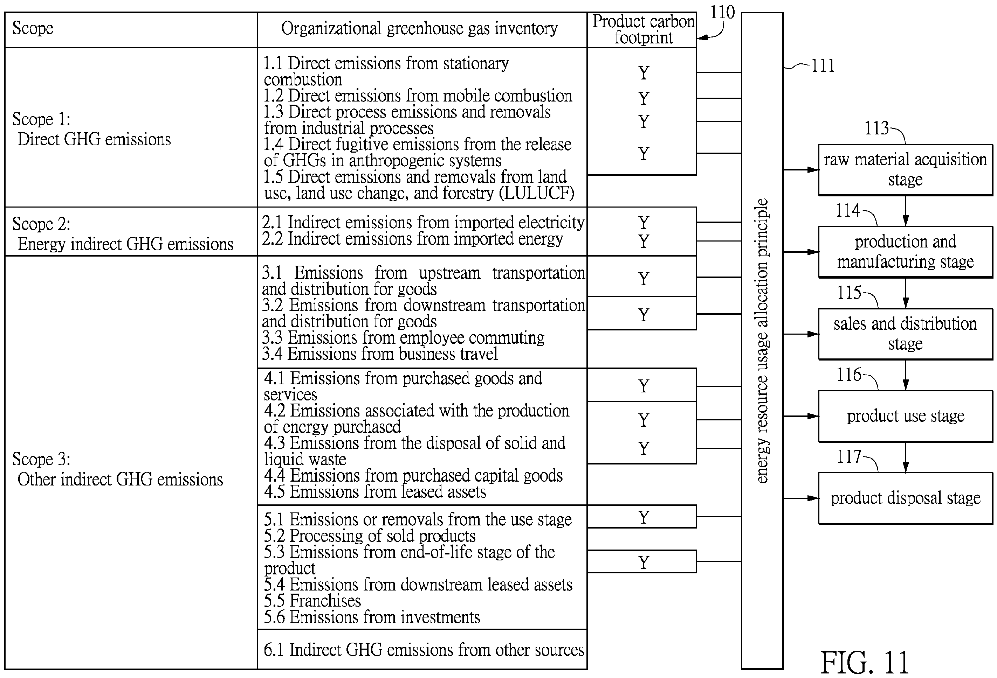

FIG. 11 is a schematic diagram showing a data relationship between organizational greenhouse gas inventory categories and product carbon footprint stages.

In the figure, the carbon inventory information 110 includes the full scope of organizational greenhouse gas that covers Scope 1 of: direct greenhouse gas emissions, Scope 2 of: energy indirect greenhouse gas emissions, and Scope 3 of: other indirect greenhouse gas emissions. Then, based on the greenhouse gas emissions defined in each of the scopes, the corresponding organizational greenhouse gas inventory and corresponding product carbon footprint are obtained.

In the process of executing a carbon inventory, when operational boundaries are established for a specific product, through the correlation between internal and external operational boundaries established in the automated carbon asset network system, the product carbon footprint can be established based on the automated carbon asset network system provided in the present invention. According to the illustrated embodiment, the automated carbon asset network system can allocate carbon inventory information 110, such as a full scope of the organizational greenhouse gases, to corresponding stages of manufacturing products according to an energy resource usage allocation principle 111. As shown in this example, the product carbon footprint stage includes a raw material acquisition stage 113, a production and manufacturing stage 114, a sales and distribution stage 115, a product use stage 116, and a product disposal stage 117, so as to achieve the goal of the carbon inventory.

In conclusion, according to the automated carbon asset network system and the carbon asset management method described in the above-mentioned embodiments, a correlation data structure formed by the enterprise during the carbon inventory is used to establish a carbon asset network using computer network technology, and the carbon asset network can automatically collect, update, version control, and integrate carbon emissions information for subsidiaries, companies with consolidated financial statements, investment companies, and upstream and downstream supply chains. Therefore, the automated carbon asset network system manages the full scope of the organizational greenhouse gases and the product carbon footprint throughout the product life cycles generated by corporate operations. The system can quickly issue carbon-related management documents in real-time according to different stakeholder requirements.

The foregoing description of the exemplary embodiments of the invention has been presented only for the purposes of illustration and description and is not intended to be exhaustive or to limit the invention to the precise forms disclosed. Many modifications and variations are possible in light of the above teaching.

The embodiments were chosen and described in order to explain the principles of the invention and their practical application so as to enable others skilled in the art to utilize the invention and various embodiments and with various modifications as are suited to the particular use contemplated. Alternative embodiments will become apparent to those skilled in the art to which the present invention pertains without departing from its spirit and scope.

## Claims

1. An automated carbon asset network system (30), **characterized by** comprising:
a carbon asset management digital platform (300) realizing a carbon inventory executed for an enterprise through a computer system; wherein the carbon asset management digital platform (300) includes a carbon asset network establishing module (301), a carbon asset network connection module (303), and a carbon asset network update module (305); wherein the automated carbon asset network system (30) executes a carbon asset management method through the carbon asset management digital platform (300); wherein the automated carbon asset network system (30) receives one or more external carbon asset management report formats (314, 315) from at least one stakeholder (311), an internal carbon asset management digital platform, one or more external carbon asset management digital platforms, and/or carbon inventory data obtained through one or more automated customized questionnaires (316) through an application program interface (310), and the automated carbon asset network system (30) automatically integrates organizational greenhouse gas inventory information and product carbon footprint information, and performs version control for upstream and downstream supply chains outside each of a plurality of operational boundaries (a, b, c, d, e, f, g, h, i, j, k), so as to obtain a full scope of the organizational greenhouse gas inventory and the product carbon footprint information throughout product life cycles for one or more brands in the enterprise;
wherein the carbon asset network establishing module (301) establishes a carbon asset network of the enterprise based on a report of an operational boundary (a) of the enterprise, and the carbon asset network includes one or more external operational boundaries (b, c, d, e, f, g, h, i, j, k) of one or more external enterprises associated with the enterprise;
wherein the carbon asset network connection module (303) configures a connection manner between the operational boundary (a) of the enterprise and the associated one or more external operational boundaries (b, c, d, e, f, g, h, i, j, k), and wherein the application program interface (310) is used to establish a connection manner between one or more carbon asset management digital platforms (300) of each of a plurality of brands of the one or more external enterprises, the one or more carbon asset management report formats (314, 315), and/or the one or more automated customized questionnaires (316); or, the connection manner between the operational boundaries (a, b, c, d, e, f, g, h, i, j, k) is not configured;
wherein, when carbon emissions information of any of the associated one or more external operational boundaries (b, c, d, e, f, g, h, i, j, k) is changed, the carbon asset network update module (305) updates the operational boundary (a) of the enterprise by using the carbon emissions information of the associated one or more external operational boundaries (b, c, d, e, f, g, h, i, j, k), and performs version control on emission factor and emissions.

2. The automated carbon asset network system (30) according to claim 1, further comprising a carbon asset network dashboard module (307) used to present a full scope of organizational greenhouse gases and the product carbon footprint information throughout the product life cycles generated by operations of the enterprise, according to the carbon asset network, to the one or more operational boundaries (b, c, d, e, f, g, h, i, j, k) of the one or more external enterprises associated with the enterprise in an interactive allocation manner.

3. The automated carbon asset network system (30) according to claim 1, wherein the at least one stakeholder (311) includes one or any combination of government organization requirements, environmental protection requirements, international supply chain brand requirements, international government requirements, and regional alliance requirements.

4. The automated carbon asset network system (30) according to claim 2, wherein the one or more carbon asset management report formats (314, 315) include a self-owned report format provided by each of the stakeholders (311) to the enterprise, and the full scope of the organizational greenhouse gas inventory and the product carbon footprint information throughout the product life cycles are managed in a form of reports.

5. The automated carbon asset network system (30) according to claim 4, further comprising a carbon asset network dashboard module (307) used to present the full scope of the organizational greenhouse gases and the product carbon footprint information throughout the product life cycles generated by operations of the enterprise, according to the carbon asset network, to the one or more operational boundaries (b, c, d, e, f, g, h, i, j, k) of the one or more external enterprises associated with the enterprise in an interactive allocation manner.

6. The automated carbon asset network system (30) according to claim 1, wherein a format of the one or more automated customized questionnaires (316) includes the format of the one or more automated customized questionnaires (316) provided to the enterprise by the carbon asset management digital platform (300) of each of the brands of the enterprise, and a full scope of the organizational greenhouse gas inventory and the product carbon footprint information throughout the product life cycles are managed in a form of questionnaires.

7. The automated carbon asset network system (30) according to claim 6, further comprising a carbon asset network dashboard module (307) used to present a full scope of organizational greenhouse gases and the product carbon footprint information throughout the product life cycles generated by operations of the enterprise, according to the carbon asset network, to the one or more operational boundaries (b, c, d, e, f, g, h, i, j, k) of the one or more external enterprises associated with the enterprise in an interactive allocation manner.

8. The automated carbon asset network system (30) according to claim 1, wherein the report for establishing the operational boundary (a) of the carbon asset network of the enterprise includes carbon emissions information disclosed by one or more subsidiaries of the enterprise, companies with consolidated financial statements, one or more investment companies, one or more outsourcing factories, and upstream and downstream supply chains.

9. The automated carbon asset network system (30) according to claim 1, wherein, after configuring the connection manner between the operational boundary (a) of the enterprise and the associated one or more external operational boundaries (b, c, d, e, f, g, h, i, j, k) through the carbon asset network connection module (303), invitation information is send to the associated external enterprises having the one or more external operational boundaries (b, c, d, e, f, g, h, i, j, k) through the carbon asset management digital platform (300), so as to invite the associated external enterprises having the one or more external operational boundaries (b, c, d, e, f, g, h, i, j, k) to accept the invitation information and return carbon emissions information that are agreed to be disclosed.

10. The automated carbon asset network system (30) according to claim 9, further comprising a carbon asset network dashboard module (307) used to present a full scope of organizational greenhouse gases and the product carbon footprint information throughout the product life cycles generated by operations of the enterprise, according to the carbon asset network, to the one or more operational boundaries (b, c, d, e, f, g, h, i, j, k) of the one or more external enterprises associated with the enterprise in an interactive allocation manner.

11. The automated carbon asset network system (30) according to claim 10, further comprising a carbon asset network reporting module (309) used to report the full scope of the organizational greenhouse gases and the product carbon footprint information throughout the product life cycles generated by operations of the enterprise, and issue carbon-related management documents in real-time according to requirements of each of the stakeholders (311).

12. The automated carbon asset network system (30) according to claim 10, wherein the full scope of the organizational greenhouse gases at least includes:
direct greenhouse gas emissions that include stationary fuel sources, mobile fuel sources, process emissions sources, fugitive emissions sources, land use, land use change, and forestry;
energy indirect greenhouse gas emissions that include purchased electricity and purchased energy; and
other indirect greenhouse gas emissions that include upstream transportation and distribution, downstream transportation and distribution, employee commuting, business travel, purchase of goods or services, fuel and energy activities, waste generated from operations, upstream purchase of capital goods, upstream leasing assets, using of sold products, processing of sold products, disposal of sold products, downstream leasing assets, licensing and franchises, and investments.

13. The automated carbon asset network system (30) according to claim 12, wherein, according to an energy resource usage allocation principle, the product carbon footprint stage allocated according to the full scope of the organizational greenhouse gas includes a raw material acquisition stage, a production and manufacturing stage, a sales and distribution stage, a product using stage, and a product disposal stage.

14. A carbon asset management method executed in a carbon asset management digital platform (300) that realizes a carbon inventory executed for an enterprise through a computer system, and the carbon asset management method comprising:
in the carbon asset management digital platform (300), establishing a carbon asset network of the enterprise by using a carbon asset network establishing module (301) based on a report of an operational boundary (a) of the enterprise, wherein the carbon asset network includes one or more external operational boundaries (b, c, d, e, f, g, h, i, j, k) of one or more external enterprises associated with the enterprise;
configuring a connection manner between the operational boundary (a) of the enterprise and the associated one or more external operational boundaries (b, c, d, e, f, g, h, i, j, k) by using a carbon asset network connection module (303), wherein an application program interface (310) is used to establish the connection manner between one or more carbon asset management digital platforms (300) of each of a plurality of brands of the one or more external enterprises, the one or more carbon asset management report formats (314, 315), and/or the one or more automated customized questionnaires (316); or, the connection manner between the operational boundaries (a, b, c, d, e, f, g, h, i, j, k) is not configured;
receiving data for at least one stakeholder (311), an internal carbon asset management digital platform, one or more external carbon asset management digital platforms, one or more external carbon asset management report formats (314, 315), and/or carbon inventory data obtained through one or more automated customized questionnaires (316), by using the application program interface (310);
automatically integrating organizational greenhouse gas inventory information and product carbon footprint information and performing version control for upstream and downstream supply chains outside each of a plurality of operational boundaries (b, c, d, e, f, g, h, i, j, k), so as to obtain a full scope of the organizational greenhouse gas inventory and the product carbon footprint information throughout product life cycles for one or more brands in the enterprise; and
when carbon emissions information of any of the associated one or more external operational boundaries (b, c, d, e, f, g, h, i, j, k) is changed, updating the operational boundary (a) of the enterprise by using the carbon emissions information of the associated one or more external operational boundaries (b, c, d, e, f, g, h, i, j, k), and performing version control on emission factor and emissions by using a carbon asset network update module (305).

15. The carbon asset management method according to claim 14, further comprising: presenting a full scope of organizational greenhouse gases and the product carbon footprint information throughout the product life cycles generated by operations of the enterprise, according to the carbon asset network, to the one or more operational boundaries (b, c, d, e, f, g, h, i, j, k) of the one or more external enterprises associated with the enterprise in an interactive allocation manner by using a carbon asset network dashboard module (307).

16. The carbon asset management method according to claim 14, wherein the at least one stakeholder (311) includes one or any combination of government organization requirements, environmental protection requirements, international supply chain brand requirements, international government requirements, and regional alliance requirements.

17. The carbon asset management method according to claim 16, further comprising: presenting a full scope of organizational greenhouse gases and the product carbon footprint information throughout the product life cycles generated by operations of the enterprise, according to the carbon asset network, to the one or more operational boundaries (b, c, d, e, f, g, h, i, j, k) of the one or more external enterprises associated with the enterprise in an interactive allocation manner by using a carbon asset network dashboard module (307).

18. The carbon asset management method according to claim 16, wherein the one or more carbon asset management report formats (314, 315) include a self-owned report format provided by each of the stakeholders (311) to the enterprise, and the full scope of the organizational greenhouse gas inventory and the product carbon footprint information throughout the product life cycles are managed in a form of reports.

19. The carbon asset management method according to claim 18, further comprising: presenting a full scope of organizational greenhouse gases and the product carbon footprint information throughout the product life cycles generated by operations of the enterprise, according to the carbon asset network, to the one or more operational boundaries (b, c, d, e, f, g, h, i, j, k) of the one or more external enterprises associated with the enterprise in an interactive allocation manner by using a carbon asset network dashboard module (307).

20. The carbon asset management method according to claim 19, further comprising: reporting the full scope of the organizational greenhouse gases and the product carbon footprint information throughout the product life cycles generated by operations of the enterprise, and issuing carbon-related management documents in real-time according to requirements of each of the stakeholders (311) by using a carbon asset network reporting module (309).
